# EUROPÄISCHE PATENTSCHRIFT

(11) **EP 3 280 348 B1**
(45) Veröffentlichungstag und Bekanntmachung des Hinweises auf die Patenterteilung: **03.06.2020**
(21) Anmeldenummer: 16711816.5
(22) Anmeldetag: 22.03.2016
(51) Int. Cl.: A61C 13/00, A61C 13/01, A61C 13/08, A61C 13/10

(54) **VERFAHREN ZUR HERSTELLUNG EINER TEIL- ODER TOTALPROTHESE SOWIE PROTHESE ERHÄLTLICH NACH DIESEM VERFAHREN**
METHOD FOR PRODUCING A PARTIAL OR TOTAL PROSTHESIS, AND PROSTHESIS OBTAINABLE BY THIS METHOD
PROCÉDÉ DE FABRICATION D'UNE PROTHÈSE PARTIELLE OU TOTALE AINSI QUE PROTHÈSE POUVANT ÊTRE OBTENUE SELON CE PROCÉDÉ

(30) Priorität: 24.03.2015 DE 102015104394
(43) Veröffentlichungstag der Anmeldung: 14.02.2018
(60) Teilanmeldung: 20163304.7
(73) Patentinhaber: Kulzer GmbH, 63450 Hanau (DE)
(72) Erfinder: RUPPERT, Klaus,, 63477 Maintal (DE); BAUER, Christian, 63825 Schöllkrippen (DE)
(74) Vertreter: Bendele, Tanja
(86) Internationale Anmeldenummer: PCT/EP2016/056252
(87) Internationale Veröffentlichungsnummer: WO 2016/150955

(56) Entgegenhaltungen:
- DE-A1-102011 102 095
- US-A1- 2014 167 300
- US-A1- 2014 308 624

## Beschreibung

Die Erfindung betrifft ein Verfahren zur Herstellung eines dentalen prothetischen Formteils, wie einer Teil- oder Totalprothese, die mehrschichtig hergestellt wird aus einem generativ hergestellten Vollkörpermodell mindestens eines Prothesenzahns oder eines Prothesenzahnbogens, wobei die Prothesenzähne innen zahnhalsseitig ein Lumen aufweisen in das eine dentinfarbene, polymerisierbare Zusammensetzung eingefüllt wird. Diese Zusammensetzung wird anschließend in mindestens einem Schritt polymerisiert. Der mindestens eine Prothesenzahn mit dentinfarbener Zusammensetzung wird mit seiner zervikalen Seite auf der zahnseitigen Oberfläche der Prothesenbasis angeordnet und zusammengepresst. Nachfolgend wird die erhaltene Teil- oder Totalprothese in einem Lichthärtegerät vollständig ausgehärtet. Ebenfalls Gegenstand der Erfindung sind die nach dem erfindungsgemäßen Verfahren erhältlichen prothetischen Formteile.

Neben handwerklichen Techniken gewinnen digitale Fertigungsmethoden im Dentalbereich immer mehr an Bedeutung. Zahnersatz, wie z.B. Kronen und Brücken, werden seit einigen Jahren mittels CAD-CAM Technologien subtraktiv in Fräsverfahren hergestellt.

Ferner gewinnen generative Methoden wie SLS (Selektives Laser Sintern) von Metallpulvern und SLM (Selective Laser Melting) von Kunststoffpulvern zur Herstellung von Kronen, Brücken und Modellen sowie Stereolithographie für Dentalprodukte auf Polymerbasis wie z.B. Provisorien, Prothesen, KFO-Apparaturen, Aufbissschienen, Bohrschablonen oder Dentalmodelle Immer mehr an Bedeutung.

Dabei ist die Herstellung von Zahnersatz auf Acrylatbasis mittels RP-Verfahren bisher immer noch starken Einschränkungen unterworfen. Mehrfarbiger Zahnersatz oder Zahnersatz aus verschiedenen Polymer-Materialien (z.B. für Schmelz- und Dentinmassen) zur Herstellung von hochwertigem und ästhetischem Zahnersatz ist bisher nur mittels aufwendiger RP-Maschinen mit mehreren Materialkammern oder mittels aufwendiger Klebe- und Fügetechniken herstellbar.

Die DE102011102095A1 offenbart die Herstellung mehrteiliger Prothesen, wobei die mindestens zwei, insbesondere 3 + n Einzelbauteile, die über mindestens eine Kontaktfläche miteinander verbindbar sind, mittels generativer Verfahren hergestellt werden. Somit offenbart die DE102011102095A1 Prothesen, die durch Zusammenfügen der genannten mindestens zwei oder mehr generativ hergestellten, benachbarten Einzelbauteile hergestellt werden. Nachteilig an diesen generativ hergestellten, benachbarten Einzelbauteilen ist, dass diese Einzelbauteile extrem passgenau gefertigt sein müssen, um innere Oberflächen in den Prothesen zu vermeiden. Derartige innere Oberflächen, die nicht mit inneren Grenzflächen gleichzusetzen sind, können nach Schrumpfungen oder durch Verzug nach dem generativen Herstellen auftreten. Diese inneren Oberflächen oder auch Risse beeinträchtigen die Ästhetik transluzenter Materialien, sowie die Stabilität als auch die Hygiene der Prothesen.

DE102007010624A1 offenbart ein Verfahren zur stereolithographischen Herstellung eines Formteils aus mindestens zwei unterschiedlichen verfestigbaren Massen, indem auf einem in die Massen eintauchbaren Träger auf seiner Unterseite Schichten der verfestigbaren Massen verfestigt werden. Zur Durchführung des zeitintensiven Verfahrens wird eine komplexe Vorrichtung mit einer spezifischen Behälteranordnung verwendet.

Es bestand die Aufgabe ein wirtschaftliches Verfahren anzugeben, das die Herstellung von hochwertigem und sehr ästhetischem Zahnersatz mittels eines generativen Verfahrens, wie Rapid-Prototyping, erlaubt. Des Weiteren bestand die Aufgabe das Verfahren zu vereinfachen und die Verfahrensdauer zu verkürzen. Zudem bestand die Aufgabe einen hochwertigen, ästhetischen Zahnersatz bereitzustellen, der eine dem Zahnschmelz ähnliche Ästhetik wie auch Transluzenz aufweist sowie einen dentinfarbenen Kern entsprechend einem natürlichen Zahn nachbildet. Vorzugsweise soll ein wirtschaftliches Verfahren die Herstellung von mehrschichtigen oder mehrfarbigen Prothesenzähnen ermöglichen.

Gelöst wurden die Aufgaben mit einem Verfahren nach Anspruch 1 sowie mit dem prothetischen Formteil, insbesondere der Teil- oder Totalprothese nach Anspruch 12.

Überraschenderweise konnte ein Verfahren entwickelt werden, das Teile der Prothese kostengünstig und rationell mittels Rapid-Prototyping-Verfahren in Kombination mit einer klassischen Verarbeitung von polymerisierbaren, dentalen Zusammensetzungen ermöglicht.

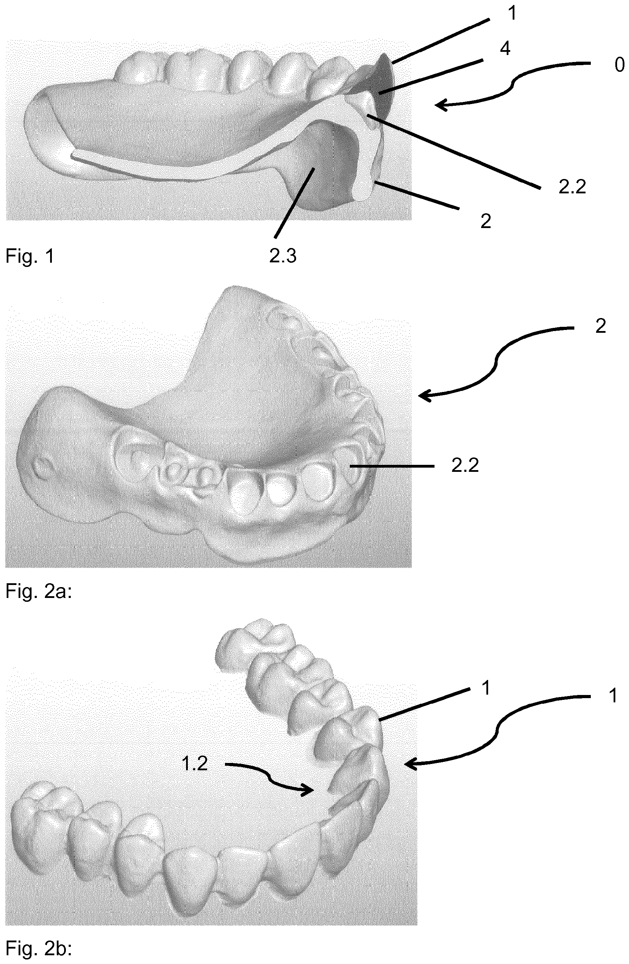

Erfindungsgemäß werden die Aufgaben dadurch gelöst, dass zunächst die Total- oder Teilprothese digital konstruiert wird, wie beispielhaft in Figur 1 dargestellt. Anschließend wird die Prothese mittels File-Splitting (Aufteilen der digitalen Daten) in einen Teil für die Prothesenbasisplatte, siehe beispielsweise Figur 2a, und einen Teil für die Prothesenzähne, siehe Figur 2b, zerlegt.

Der Datensatz der Prothesenzähne mit einer angedeuteten Schneidekante ist softwarebedingt (Stand der Technik) zunächst eine offene Hülle (bestehend nur aus Oberflächen **1**) und kann als offene Oberflächenhülle bezeichnet werden. Diese Oberfläche mit einer Öffnung synonym Lumen in Richtung zur Prothesenbasisplatte, ist bspw. in Figur 1 dargestellt.

Die reine Oberflächenhülle - synonym zu digitale Daten des Modells der Oberfläche - besteht aus einer Verbindung von Punkten, welche die Geometrie beschreiben. Die Punkte einer Punktewolke werden digital so verbunden, dass diese Dreiecke bilden. So erhält man eine Oberfläche bestehend aus verschieden großen Dreiecken. Die Größe der Dreiecke passt sich der Geometrie an, es gibt also keine Einheitsgröße der Dreiecke. Die Wandstärke der Oberflächenhülle ist, da digital entstanden, gleich Null, d.h. die Oberflächenhülle weist eine Wandstärke von 0 mm auf.

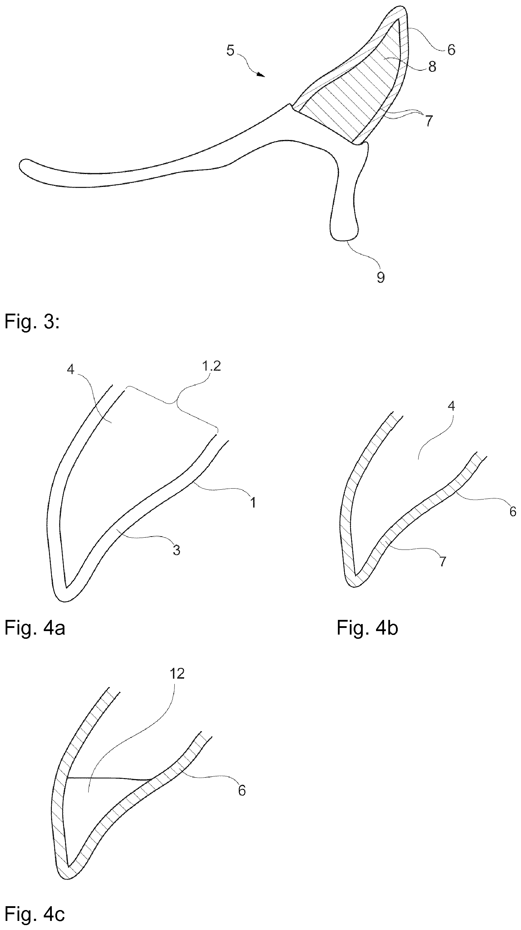

Aus der reinen Oberflächenhülle - den digitale Daten des Modells der Oberfläche - der Prothesenzähne wird unter Verwendung einer entsprechenden Software ein Vollkörpermodel generiert (Figur 4a). Dies geschieht, indem die digitale Daten der Oberflächen (2-Dimensional) in den 3ten Raum erweitert werden (3 Dimensional - das sogenannte 3D-Modell). Dies wird im Weiteren "Wandstärke" genannt.

Diese Wandstärke wird während der konstruktiven Aufstellung der Teil-/Totalprothese festgelegt und gibt den ästhetischen Zahnverlauf wieder. Bevorzugte Wandstärken liegen im Bereich von 0,005 mm bis hin zur Zahnmitte, bspw. von 0,005 mm - 5 mm. Nach der zweiten Alternative wird ein Prothesenzahn ohne inneres Lumen (synonym: Hohlraum) zum Einfüllen einer dentinfarbenen, dentalen Zusammensetzung erhalten. Dieses Vollkörpermodel wird anschließend mittels Software in parallele Schichten zerlegt, wie es im nachfolgenden Druckvorgang benötigt wird. Vorzugsweise wird das Vollkörpermodell in der Software in parallele Schichten mit einer jeweiligen Schichtdicken von ca. 5 bis 200 µm geschnitten. Die Prothesenzähne können vorzugsweise aus mindestens einem oder verschiedenen farblich dem Zahnschmelz ähnlichen lichthärtenden Material mittels Rapid-Prototyping-Verfahren (RP-Verfahren) hergestellt werden. Zur wirtschaftlichen Herstellung werden die Einzelzähne vorteilhafterweise zu einem Zahnbogen verbunden und gleichzeitig gedruckt. Für sehr hochwertige Teil-/Totalprothesen können die Zähne im Wesentlichen einzeln gedruckt werden, wobei sie vorzugsweise zumindest zervikal miteinander verbunden werden.

Ebenso kann die Prothesenbasis(platte) mittels eines generativen Verfahrens, wie dem RP-Verfahren, hergestellt werden. Die Prothesenbasis wird aus einer gingivafarbenen, polymerisierbaren, dentalen Zusammensetzung hergestellt.

Besonders bevorzugt wird der Hohlraum synonym Lumen des erzeugten Zahnes bzw. die Vertiefungen des erzeugten Zahnbogens mit einem oder mehreren fließfähigen, dentinfarbenen, lichthärtenden, dentalen Zusammensetzungen vollständig aufgefüllt. Die Aushärtung kann entweder Schicht für Schicht oder auch in einem Schritt für alle Schichten - mit Ausnahme der letzten Schicht - gleichzeitig erfolgen.

Nachfolgend wird der mit ungehärteter und optional ausgehärteter Zusammensetzung gefüllte Hohlraum synonym das Lumen des Prothesenzahns oder der Prothesenzähne des Zahnbogens mit der Prothesenbasisplatte zusammengepresst, dabei kann evtl. überschüssige bzw. überquellende, lichthärtende Zusammensetzung entfernt werden. Die zusammengepresste Prothesenbasis und der Zahnbogen können anschließend in einem Lichthärtegerät ausgehärtet werden. Die Prothesenbasis muss dabei entweder noch eine Dispersionsschicht haben oder die Oberfläche zuvor mit z.B. Palabond aktiviert worden sein. Bei dieser Härtung werden alle Komponenten dauerhaft und randspaltfrei miteinander verklebt und gleichzeitig die Endfestigkeit des Prothesenmaterials erzeugt.

Diese Nachvergütung (Post-Curing) bzw. Verklebung erfolgt mit intensivem Licht in einer auf die jeweiligen Photoinitiatoren abgestimmten Wellenlänge z.B. bei 385 nm (Lucirin TPO) oder bei ca. 100 - 600 nm Campherchinon ). Ein geeignetes Lichtgerät ist z.B. die Laborlichtlampe HiLite power der Heraeus Kulzer GmbH.

Zur Herstellung der erfindungsgemäßen Teil-/Totalprothese wird die Stereolithographie oder DLP-Verfahren (Verfahren für das Aushärten von flüssigen Monomeren mittels UV- oder sichtbarem Licht) als RP-Verfahren bevorzugt. Weitere denkbare generative bzw. aufbauende Herstellverfahren zur Herstellung der Zahnprothesen und Prothesenbasisplatte umfassen Lasersintern oder auch das 3D-Drucken, wie das Fused Deposition Modeling.

Gegenstand der Erfindung ist somit ein Verfahren zur Herstellung eines dentalen prothetischen Formteils, wie eine Total- oder Teilprothese, Prothesenzahn oder Zahnbogen, sowie die jeweiligen prothetischen Formteile, erhältlich nach dem Verfahren, umfassend mindestens einen Prothesenzahn oder Prothesenzähne, die vorzugsweise zu einem Zahnbogen verbunden sind, und eine Prothesenbasis(platte), indem
(A)
   1. (i) die digitalen Daten des virtuellen Modells der Oberfläche des mindestens einen Prothesenzahns und/oder Prothesenzähne bereitgestellt werden, wobei die Oberfläche des mindestens einen Prothesenzahns ein innen liegendes Lumen ausbildet und/oder die Oberfläche der Prothesenzähne jeweils unabhängig ein Lumen bilden oder bis zu einem gemeinsamen Lumen bilden, insbesondere kann sich das innenliegende Lumen zumindest teilweise bis vollständig über den inneren Zahnbogen erstrecken, und
      1. (ii) - die digitalen Daten des virtuellen Modells der Oberfläche der Prothesenbasisplatte bereitgestellt werden, oder
      2. (i) die digitalen Daten eines virtuellen Modells der Oberflächen (STL-Datei) des Formteils umfassend den mindestens einen Prothesenzahn und/oder die Prothesenzähne, insbesondere als Zahnbogen, sowie die Prothesenbasis bereitgestellt werden,
   2.
      (ii) die digitalen Daten des virtuellen Modells der Oberfläche werden aufgeteilt (File-Splitting)
         - in die digitalen Daten des virtuellen Modells der Oberfläche des mindestens einen Prothesenzahns oder der Prothesenzähne,
         - wobei die Oberfläche des mindestens einen Prothesenzahns ein innen liegendes Lumen ausbildet und/oder die Oberfläche der Prothesenzähne jeweils unabhängig ein Lumen bilden oder bis zu einem gemeinsamen Lumen bilden, insbesondere kann sich das innenliegende Lumen zumindest teilweise bis vollständig über den inneren Zahnbogen erstrecken, und
         - in die digitalen Daten des virtuellen Modells der Oberfläche der Prothesenbasisplatte, und
      (iii) die digitalen Daten des virtuellen Modells der Oberfläche des mindestens einen Prothesenzahns und/oder die Oberfläche der Prothesenzähne mit einem innen liegenden Lumen werden umgewandelt, insbesondere mittels einer Computersoftware, in digitale Daten eines virtuellen Vollkörpermodells basierend auf den Daten des virtuellen Modells der Oberfläche des mindestens einen Prothesenzahns, indem innen in das virtuelle Modell der Oberfläche eine definierte Wandstärke an die Innenseite der Oberfläche des Prothesenzahns oder der Prothesenzähne berechnet wird und das virtuelle Vollkörpermodell des mindestens einen Prothesenzahns oder der Prothesenzähne erhalten wird, insbesondere, so dass sich das innen liegende Lumen 4 verringert, und optional
      (iv) das virtuelle Vollkörpermodell des mindestens einen Prothesenzahns oder der Prothesenzähne, insbesondere des Zahnbogens, wird digital in parallele Schichten (Scheiben, slicen) zerlegt, wobei insbesondere digitale Daten der Schichten für die Durchführung des generativen Verfahrens (x,y,z-Daten) erhalten werden,
      (v) die digitalen Daten des virtuellen Modells der Oberfläche der Prothesenbasis(platte) aus Schritt (ii) liegen als Daten eines virtuellen Modells mit geschlossener Oberfläche vor oder werden im Bereich (2.2) geschlossen oder es wird in dem mindestens einen Bereich, in dem das virtuelle Modell des mindestens einen Prothesenzahns oder der Prothesenzähne, insbesondere des Zahnbogens, und das virtuelle Modell der Prothesenbasis aufgeteilt wurden, eine geschlossene Oberfläche generiert, und optional
      (vi) das virtuelle Modell der Prothesenbasis wird digital in parallele Schichten zerlegt, wobei insbesondere digitale Daten der Schichten für die Durchführung des generativen Verfahrens (x,y,z-Daten) erhalten werden,
      (vii) Durchführen der Schrittkombinationen (iii) und (iv) oder (v) und (vi) in der Reihenfolge (iii), (iv), (v) und (vi) oder (v), (vi), (iii) und (iv),
(B)
   (viii) jeweils unabhängig Herstellen des mindestens einen Prothesenzahns oder der Prothesenzähne, insbesondere eines Zahnbogens, sowie der Prothesenbasis in einem generativen bzw. additiven Verfahren,
   (ix) Fügen des mindestens einen Prothesenzahns oder der Prothesenzähne, insbesondere des Zahnbogens, und der Prothesenbasis zu einem dentalen prothetischen Formteil, wie einer Total- oder Teilprothese, und
   (x) Erhalten des dentalen prothetischen Formteils mit mindestens einem Prothesenzahn und einer Prothesenbasis(platte).

Das virtuelle Modell der Oberflächen der Zähne und der Prothesenbasis können entsprechend bekannten Verfahren aus dem Stand der Technik mittels Verwendung eines Computerprogramms generiert und als digitale Daten bereitgestellt werden.

Die (A) (i) digitalen Daten eines virtuellen Modells der Oberflächen (STL-Datei) des Formteils können auf bekannte Art und Weise erfasst und/oder erstellt werden. Beispielsweise durch Scannen eines teilbezahnten oder zahnlosen Kiefers, einer Abformung oder eines Modells mit oder ohne Zähne. Die digitalen Zähne können aus einer digitalen Bibliothek zur Generierung der digitalen Daten eines virtuellen Modells der Oberflächen (STL-Datei) des Formteils oder der digitalen Daten des Modells der Prothesenzähne verwendet werden, bspw. um den zervikalen Bereich der Prothesenzähne anzupassen.

Nach dem Erfassen, Erstellen oder Bereitstellen der Daten der Oberfläche des Formteils umfassend den mindestens einen Prothesenzahn werden die digitalen Daten des virtuellen Modells der Oberfläche aufgeteilt (File-Splitting). Alternativ liegen die digitalen Daten der Modelle der Prothesenzähne und der Prothesenbasisplatte isoliert vor und werden in den zervikalen und zahnseitigen Bereichen individuell angepasst.

Die erfindungsgemäßen Schichten entsprechen Scheiben einer definierten Schichtdicke. Die Schichten bzw. Scheiben werden durch das sogenannte Slicen erhalten. Die erfindungsgemäßen Schichten umfassen Scheiben, wie bspw. in DLP-Verfahren, als auch Schichten, die erhalten werden durch eine Abscheidung von Bahnen, wie im FDM-Verfahren.

Nach dem File-Splitting entsteht für das virtuelle Modell der Oberfläche des mindestens einen Prothesenzahns, der Prothesenzähne oder des Zahnbogens an der Kontaktfläche zur Prothesenbasisplatte ein offenes Lumen, das durch erneutes anfügen der Prothesenbasisplatte wieder geschlossen werden kann.

Das virtuelle Modell der Prothesenbasis wird als Vollkörpermodell 10 gerechnet und digital in parallele Schichten zerlegt,

Ebenso ist die Oberfläche der Prothesenbasisplatte im Bereich, in dem der virtuelle mindestens eine Prothesenzahn, die Prothesenzähne oder der Zahnbogen nach dem File-Splitting abgeschnitten wurde eine Öffnung in der Oberfläche, die im virtuellen Modell der Prothesenbasis geschlossen wird. Zudem wird das virtuelle Modell der Prothesenbasis als Vollkörpermodell gerechnet und vorzugsweise anschließend in parallele Schichten geschnitten, die die Daten für das RP-Verfahren liefern. Für den Druckvorgang werden die digitalen Daten referenziert und der Volumenschrumpf berücksichtigt.

Die in Schritt (v) vorliegenden digitalen Daten des virtuellen Modells der Oberfläche der Prothesenbasis(platte) zeigen vorzugsweise in dem mindestens einen Bereich, in dem das virtuelle Modell des mindestens einen Prothesenzahns oder der Prothesenzähne, insbesondere des Zahnbogens eingesetzt wird eine formschlüssige Passung und/oder stoffschlüssige Passung zur zervikalen, unteren und/oder inneren Oberfläche des Vollkörpermodells im Bereich des jeweiligen Zahnhalses des mindestens einen Prothesenzahns oder Zahnbogen. Besonders bevorzugt entspricht der zervikale Bereich mindestens eines Prothesenzahns 1.2 einem Negativ des entsprechenden als Positiv ausgebildeten zahnseitigen Bereiches 2.2 der Prothesenbasisplatte. Erfindungsgemäß werden alle Bereiche 1.2 und 2.2 für alle Zähne individuell als Negativ und Positiv vorgesehen. Entsprechend einer besonders bevorzugten Ausführungsform sind daher alle zervikalen Bereiche der Prothesenzähne 6 (1 bis n) individuell an einen zahnseitigen Bereich 2.2 (1 bis n) der äußeren Oberfläche der Prothesenbasisplatte angepasst. Auf diese Weise werden alle Prothesenzähne definiert einem zahnlosen Bereich der Prothesenbasisplatte spezifisch zugeordnet, es findet somit eine Codierung in der Art Schlüssel/Schloss statt. Folglich liegen die Verbindungsstelle zwischen Prothesenzahn und -basisplatte in Form von Vertiefungen und entsprechend geformten Gegenstücken vorzugsweise als eindeutige Passung vor.

Bei der Generierung des virtuellen Vollkörpermodells des mindestens einen Prothesenzahns oder des Zahnbogens mit definierter Wandstärke ändert sich die äußere Dimension der Oberflächen nicht. Die Wandstärke dehnt sich lediglich nach innen in das Innere der Zähne aus und vermindert das Lumen bzw. den Hohlraum innerhalb der Oberfläche, ggf. bis auf Null, d.h. ein Vollkörpermodell dessen Oberfläche im Bereich des Zahnhalses einem Negativ der Oberfläche der Prothesenbasis entspricht.

In Schritt B werden die realen Modelle der Prothesenzähne und der Prothesenbasis hergestellt.

Vorzugsweise kann das digitale Modell der Prothesenbasis in Schritt (v), vor Durchführung des Schrittes (vi) in ein Vollkörpermodell umgewandelt werden. Alternativ kann das digitale Modell der Prothesenbasis während oder nach der Zerlegung in Schichten nach der Durchführung des Schrittes (vi) in vollflächige Schichten umgewandelt werden. Denkbar ist auch eine Umwandlung in Druckbahnen. Die erfindungsgemäße Herstellung erfolgt vorzugsweise in einem RP-Verfahren, in dem gleichzeitig eine gesamte Schicht der polymeren Zusammensetzung polymerisiert wird.

Im Schritt A (iii) wird bevorzugt eine Wandstärke im virtuellen Vollkörpermodell von größer gleich 0,005 bis 3 mm, insbesondere von größer gleich 0,025 mm generiert, insbesondere von 0,025 mm bis zu einem Vollkörpermodell ohne inneres Lumen, wobei die zervikale, innere Oberfläche des Vollkörpermodells im Bereich des jeweiligen Zahnhalses einem Negativ der zahnseitigen äußeren Oberfläche der Prothesenbasis entspricht. Bevorzugte Wandstärken liegen bei 0,05 bis 5 mm, bevorzugt von 0,075 bis 2,5 mm. Je nach Ausführungsform kann das Lumen in einem Prothesenzahn vorgesehen sein, in jedem Prothesenzahn je ein Lumen oder auch ein gemeinsames Lumen über alle Prothesenzähne in einem Zahnbogen. Sollen besonders ästhetische, hochwertige Prothesen hergestellt werden, wird vorzugsweise je Prothesenzahn im Frontzahnbereich ein Lumen vorgesehen, während in den weiteren Zähnen des Zahnbogens ein gemeinsames Lumen vorliegen kann. Zur Herstellung besonders kostengünstiger Prothesen kann der Zahnbogen der Prothesenzähne auch ein einziges Lumen aufweisen. Dem Fachmann ist klar, dass jede denkbare Kombination nach dem erfindungsgemäßen Verfahren hergestellt werden kann und erhältlich ist. Daher sind auch Prothesenzähne oder Zahnbögen mit den vorgenannten Wandstärken Gegenstand der Erfindung.

Ferner weist das in dem erfindungsgemäßen Verfahren in Schritt (iii) erhaltende virtuelle Vollkörpermodell ein Lumen auf, dessen Abmessungen insbesondere von der Wandstärke abhängen.

Die in dem generativen Verfahren hergestellten Wandstärken des generativ hergestellten mindestens einen Prothesenzahns, der Prothesenzähne und/oder des Zahnbogens betragen vorzugsweise größer gleich 0,025 mm, vorzugsweise 0,05 mm bis 5 mm, weiter bevorzugt 0,075 mm bis 2 mm oder bis zu einem Vollkörper ohne inneres Lumen, wobei die zervikale, innere Oberfläche des Vollkörpers im Bereich des jeweiligen Zahnhalses einem Negativ der zahnseitigen äußeren Oberfläche der Prothesenbasis entspricht. Nach einer Alternative weist ein Zahnbogen über mindestens zwei Prothesenzähne ein gemeinsames Lumen auf. Vorzugsweise weisen die Prothesenzähne des Frontzahnbereiches jeweils ein Lumen auf.

Nach einer besonders bevorzugten Alternative bilden zwei oder mehr Prothesenzähne ein virtuelles Vollkörpermodell, indem sie jeweils approximal verbunden sind und mindestens einen Teil eines Zahnbogens bilden, insbesondere bilden 2 bis 16 Zähne jeweils approximal verbunden einen Zahnbogen als virtuelles Vollkörpermodell eines Ober- oder Unterkiefers.
Nach dem erfindungsgemäßen Verfahren werden zwei oder mehr der generativ hergestellten Prothesenzähne approximal verbunden und bilden mindestens einen Teil eines Zahnbogens, insbesondere werden 2 bis 16 Zähne hergestellt, die jeweils approximal verbunden einen Zahnbogen eines Ober- oder Unterkiefers bilden. Gegenstand der Erfindung ist auch ein Zahnbogen erhältlich nach dem Verfahren.

Die digitalen Schichten der Prothesenzähne, des Zahnbogens und/oder der Prothesenbasis(platte) weisen vorzugsweise eine Schichtdicke (z-Daten) von 5 bis 200 µm auf, insbesondere eine Schichtdicke von 25 bis 200 µm, weiter bevorzugt von 25 bis 100 µm, besonders bevorzugt von 25 bis 50 µm.

Die Herstellung der prothetischen Formteile, wie der Prothesenzähne, d.h. der Prothesenzähne mit Lumen und/oder der Prothesenbasisplatte erfolgt vorzugsweise in einem generativen Verfahren, umfassend eine photochemische Polymerisation (Strahlenhärtung), Stereolithographie und/oder 3D-Printing. In einer besonders bevorzugten Ausführungsform erfolgt die Herstellung in einem generativen Verfahren mit homogenisierter Lichtmengenverteilung mit einem Flächenlichtmodulator, wie einem Rapid-Prototyping-Verfahren, bei dem mit homogenisierter Lichtmengenverteilung, insbesondere mit einem LED-Beamer bei dem die Lichtmengenverteilung homogenisiert wird, wie in DE102012224005A1 offenbart. Nach diesem Verfahren kann jeweils eine gesamte Schicht der polymerisierbaren Zusammensetzung, d.h. des mindestens einen Prothesenzahns, der Prothesenbasis mit Belichtungsschritt bzw. Belichtungsblitz polymerisiert werden. Bei Rapid-Prototyping-Verfahren können neben UV/Vis-Lasern, UV/VIS-LED-Beamer, Ultraviolett-(UV)-Lasern auch UV-LED-Beamer zum Einsatz kommen sowie auch LED-Beamer mit längerwelligem Licht, z.B. 420-430 nm.

Das erfindungsgemäße Verfahren umfasst vorzugsweise einen Schritt der generativen Herstellung des Prothesenzahns, der Prothesenzähne, des Zahnbogens und/oder der Prothesenbasisplatte, wobei eine photochemische Polymerisation einer flüssigen Zusammensetzung umfassend Monomere und/oder Polymere ausgelöst durch eine Lichtquelle erfolgt. Als Lichtquelle wird vorzugsweise ein Beamer oder ein Lasersystem, insbesondere mit einer Strahlung mit einer Wellenlänge von 100 bis 600 nm, vorzugsweise von 180 bis 440 nm verwendet, bevorzugt wird ein LED-Beamer mit einer Strahlung um 385 nm bzw. 430 nm verwendet oder ein Lasersystem mit einer Strahlung mit einer Wellenlänge zwischen 220 bis 440 nm.

Gleichfalls Gegenstand der Erfindung ist ein Verfahren, in dem
a) aus dem virtuellen Vollkörpermodell mit Lumen mindestens ein Prothesenzahn mit einem Lumen oder Prothesenzähne, insbesondere ein Zahnbogen, mit mindestens einem Lumen bis zu jeweils einem Lumen je Zahn in einem generativen Verfahren hergestellt werden, oder
b) aus dem virtuellen Vollkörpermodell optional umfassend mindestens einen Prothesenzahn mit Lumen bis zu einem Vollkörpermodell in dem der mindestens eine Prothesenzahn ohne inneres Lumen vorliegt, wobei die Oberfläche dieses Vollkörpermodells im zervikalen Bereich des jeweiligen Zahnhalses der Prothesenzähne, insbesondere des Zahnbogens, ohne inneres Lumen einem Negativ der zahnseitigen äußeren Oberfläche des Bereiches der Prothesenbasis entspricht, und
   - mindestens ein Prothesenzahn oder Prothesenzähne, insbesondere ein Zahnbogen, in einem generativen Verfahren hergestellt werden.

Ebenfalls Gegenstand der Erfindung ist ein Verfahren, das in einem Verfahrensschritt (B) nach dem Durchführen des Schrittes (viii)
- der mindestens eine Prothesenzahn mit einem Lumen oder die Prothesenzähne, insbesondere ein Zahnbogen, mit mindestens einem Lumen bis zu jeweils einem Lumen je Zahn, das mindestens eine Lumen mindestens teilweise mit mindestens einem oder mehreren fließfähigen, dentinfarbenen, polymerisierbaren, dentalen Zusammensetzungen in einem oder mehreren Schritten aufgefüllt wird, optional wird die dentale Zusammensetzung zumindest teilweise polymerisiert, und in einem weiteren Verfahrensschritt erfolgt das
   (ix) Fügen des mindestens einen Prothesenzahns oder der Prothesenzähne, insbesondere eines Zahnbogens, und der Prothesenbasis zu einem dentalen prothetischen Formteil, wie einer Teil-/Totalprothese, indem der mindestens eine Prothesenzahn oder die Prothesenzähne, insbesondere des Zahnbogens, mit ihrem zervikalen Bereich mit den entsprechenden zahnseitigen Bereichen der Prothesenbasis zusammengefügt werden und
   (x) das dentale prothetische Formteil einer Teil- oder Totalprothese erhalten wird. Dabei ist es besonders bevorzugt, wenn nach dem Zusammenfügen die Zusammensetzung in der Teil-/Totalprothese mittels UV- und/oder VIS-Licht weiter polymerisiert wird.

Die teilweise Polymerisation kann nach Schritt (B) (viii) und vor Durchführung des Schrittes (ix) erfolgen.
Das mindestens eine Lumen wird vorzugsweise mindestens teilweise mit mindestens einem oder mehreren fließfähigen, dentinfarbenen, UV/VIS-polymerisierbaren dentalen Zusammensetzungen aufgefüllt und in einem oder mehreren Schritten mit UV- und/oder VIS-Licht polymerisiert. Das Auffüllen kann in einem Schritt, in mehreren Schritten, wie beispielsweise in 1 bis 20 Schritten erfolgen, wobei die Polymerisation der Zusammensetzung(en) ebenfalls einmalig oder mehrfach erfolgen kann.

Das Fügen im erfindungsgemäßen Verfahren erfolgt vorzugsweise (ix) indem der mindestens eine Prothesenzahn oder die Prothesenzähne, insbesondere ein Zahnbogen, und die Prothesenbasis zu einem dentalen prothetischen Formteil
a) zusammengefügt werden und anschließend die dentinfarbene, dentale Zusammensetzung polymerisiert wird, oder
b) zusammengeklebt, c) aneinander geschmolzen, d) zusammengeschweisst und/oder e) aneinandergeschrumpft werden.

Entsprechend einem besonders bevorzugten Verfahrensschritt des Verfahrens erfolgt ein (a) Einfüllen einer polymerisierbaren, dentalen, insbesondere fließfähigen, Zusammensetzung in das Lumen des mindestens einen Prothesenzahns oder in das/die Lumen der Prothesenzähne, insbesondere des Zahnbogens, und
(b) Polymerisieren der Zusammensetzung, und optional Wiederholen der Schritte a) und b), und
(c) Fügen des mindestens einen Prothesenzahns oder der Prothesenzähne, insbesondere des Zahnbogens, im zervikalen Bereich mit den entsprechenden zahnseitigen Bereichen der Prothesenbasis oder insbesondere
(c) Fügen des mindestens einen Prothesenzahns oder der Prothesenzähne, insbesondere eines Zahnbogens, im zervikalen Bereich mit den entsprechenden zahnseitigen Bereichen der Prothesenbasis und Polymerisieren der Zusammensetzung, wobei durch das Fügen und optionale Polymerisieren des mindestens einen Prothesenzahns oder der Prothesenzähne mit der Prothesenbasis (9) verbunden wird.

Durch das erfindungsgemäße Verfahren kann eine Automatisierung der einzelnen Verfahrensschritte bis zur Automatisierung aller Verfahrensschritte erfolgen. Automatisiert werden können insbesondere teilweise bis vollständig die Schritte (A), (B), insbesondere (viii) und (ix), bevorzugt (ix) a, b, c oder d und/oder e.

Die Verbindung des Prothesenzahns, der Prothesenzähne oder des Zahnbogens mit der Prothesenbasisplatte erfolgt insbesondere randspaltfrei.
In dem erfindungsgemäßen Verfahren werden vorzugsweise als polymerisierbare, dentale Zusammensetzung eine oder mehrere fließfähige, dentinfarbene Zusammensetzungen eingesetzt, welche umfassen, Monomere, insbesondere Di(meth)acrylate, sowie optional Füllstoffe, insbesondere Dentalgläser. Des Weiteren weist die Zusammensetzung vorzugsweise eine Viskosität von 10² bis 10⁶ mPa·s auf. Bevorzugt ist eine Viskosität von 2 * 10² mPa·s nach einer 248 sec. andauernden Belastung, von etwa 5 * 10⁵ mPa·s während des Aufbaus der Belastung und in Ruhe von etwa von 10⁶ mPa·s.

Das erfindungsgemäße Verfahren erlaubt in besonderer Weise eine optimale Anpassung der Geometrie und/oder Zahnfarben und/oder Gingivafarben sowie deren Verlauf, Abstufung in ausgewählten Bereichen der prothetischen Versorgung in einem automatisierten Verfahren. Dabei kann die jeweilige Dentinfarbe optimal an die Zahnfarbe der generativ hergestellten Hülle der Zahnprothese oder des Zahnbogen angepasst werden. Daher erlaubt das erfindungsgemäße Verfahren eine sehr wirtschaftliche Herstellung von teil- oder totalprothetischen Versorgungen in einem automatisierten Verfahren bei gleichzeitiger Beibehaltung höchster ästhetischer Ansprüche an die prothetische Versorgung. Auf diese Weise kann eine wirtschaftliche Anpassung der Zahnfarben an die Restbezahnung erfolgen.
Die dentalen, polymerisierbaren Zusammensetzungen zur generativen Herstellung der Prothesenzähne, die lichthärtende dentinfarbene Zusammensetzung als auch die Zusammensetzung zur generativen Herstellung der Prothesenbasis können beispielhaft die folgenden Komponenten umfassen. Bevorzugt wird eine lichthärtende Zusammensetzung zur Herstellung der vorgenannten Prothesenteile eingesetzt.

Eine typische Zusammensetzung kann umfassen (a) mindestens eine härtbare Monomer- und/oder Polymerkomponente und optional (b) mindestens eine Füllstoffkomponente. Der Anteil der Monomere in der Gesamtzusammensetzung kann bis zu 100 Gew.-% betragen, bevorzugt sind von 40 bis 99,99 Gew.-%, insbesondere 50 bis 99,99 Gew.-% oder von 98 Gew.-% bis zu 99,99 Gew.-%, wobei 0,01 bis 2 Gew.- % Initiatoren, Stabilisatoren oder Hilfsmittel enthalten sein können.

Dabei kann eine Zusammensetzung als Füllstoffkomponente (b) einen Gesamtfüllstoffgehalt in Bezug auf die Gesamtzusammensetzung umfassen von 10 bis 98 Gew.-%, insbesondere von 60 bis 95 Gew.% aufweisen umfassend (b.1) 10 bis 35 Gew.-%, insbesondere 10 bis 30 Gew.-%, vorzugsweise 10 bis 25 Gew.-%, besonderes bevorzugt 15 bis 25 Gew.-%, insbesondere silanisierte Oxidpartikel und/oder (b.2) mindestens ein Dentalglas von 0 bis 75 Gew.-%, insbesondere von 10 bis 65 Gew.-%, besonders bevorzugt von 40 bis 60 Gew.-%, wie 45 bis 50 oder 50 bis 65 Gew.-%, wobei vorzugsweise ein Gemisch von Dentalgläsern aus 50 bis 90 % grob- und 10 bis 50 % feinteiligen Dentalgläsern eingesetzt wird, welche ein Größenverhältnis, bezogen auf die mittlere Partikelgröße (d₅₀-Wert), von feinteilig zu grobteilig von 30:1 bis 1:30 aufweisen, und optional, (b.3) 0,5 bis 10 Gew.% nicht-agglomerierte Nanofüller mit Partikelgrößen von 1 bis 50 nm.

Der Anteil an (a) Monomeren in der Gesamtzusammensetzung kann 2 bis 90 Gew.-% betragen, insbesondere, 5 bis 80 Gew.-%, wobei die Zusammensetzung optional mindestens 0,1 Gew.-% Initiatoren umfasst, insbesondere 0,1 bis 2 Gew.-%.

Als (a) härtbare bzw. polymerisierbare Monomer- und/oder Polymerkomponenten werden bevorzugt für die Zusammensetzung ausgewählt ein oder mehrere Monomere aus der Monomermischung (i), (ii) und (iii):
(i) mindestens ein Monomer der Gruppe Bisglycidylacrylat, alkoxyliertes Pentaerythritoltetraacrylat, TCD-di-HEMA oder TCD-di-HEA, sowie Derivate davon,
   insbesondere zu 2 bis 20 Gew.-%, insbesondere 2 bis 10 Gew.-%, bezogen auf die Gesamtzusammensetzung und
(ii) mindestens 5 bis 80 % difunktionelle Vernetzer UDMA (Diurethandimethacrylat) und/oder aliphatisches Diacrylat, insbesondere 25 bis 75 Gew.-% bezogen auf die Gesamtzusammensetzung, und
(iii) optional Rest TEDMA (Trimethylenglykoldimethacrylat) und/oder weitere multifunktionelle Vernetzer, insbesondere 0 bis 15 Gew.-%, insbesondere 0,01 bis 10 Gew.-%, in Bezug auf die Gesamtzusammensetzung,
wobei insbesondere (i), (ii) und (iii) zu insgesamt 5 bis 90 Gew.-% im Dentalmaterial vorliegen können, vorzugsweise 50 bis 85 Gew.-%, c) bis 1 % Initiator(en) und
optional (b) auf 100 Gew.-% mindestens eine Füllstoffkomponenten in der Zusammensetzung vorliegen, wie Kieselsäure. Optional können zusätzlich zu den polymerisierbaren Monomeren partikuläre, organische Polymere in der Gesamtzusammensetzung auf 100 Gew.-% enthalten sein.

Nicht agglomerierte Nanofüller sind an sich bekannt und z.B. in WO0130305A1 oder am Beispiel von SiO₂ in DE19617931A1 beschrieben. Sie können vorzugsweise ausgewählt aus der Gruppe SiO₂, ZrO₂, TiO₂, Al₂O₃ sowie aus Mischungen aus mindestens zwei dieser Stoffe sein. Sie können - wie in DE19617931A1 beschrieben - in organischen Lösungsmitteln dispergiert sein, aber auch in Wasser oder Wasser enthaltenden Lösungsmittelmischungen zugesetzt werden.

Als Dentalgläser eignen sich besonders Bariumglaspulver, vorzugsweise Bariumglas-Aluminium-Borsilikatgläser, und/oder Strontiumglaspulver. Die mittlere Partikelgröße der grobteiligen Dentalgläser beträgt vorzugsweise 5-10 [micro]m, insbesondere um 7 [micro]m und die der feinteiligen 0,5 bis 2 [micro]m, insbesondere 1 [micro]m. Optional vorhandene weitere Dentalgläser haben z.B. mittlere Korngrößen von 2-5 oder 10-50 [micro]m.

Die Füllstoffkomponente kann demnach Dentalgläser mit insgesamt drei oder mehr Kornfraktionen aufweisen. Sie kann auch weitere, herkömmliche, auf dem Dentalgebiet übliche Füllstoffe enthalten, wie etwa Quarz-, Glaskeramik- oder Mischungen davon. Darüber hinaus können die Komposite Füllstoffe zur Erzielung einer erhöhten Röntgenopazität enthalten.

Das Dentalmaterial umfasst vorzugsweise als härtbare Monomer- und/oder Polymerkomponente die nachfolgend genannten Monomere oder Polymere:
Als Monomere kommen die auf dem Dentalgebiet üblichen Monomere in Betracht: Beispiele sind radikalisch polymerisierbare Monomere wie Mono(meth)acrylate, Methyl-, Ethyl-, Butyl-, Benzyl-, Furfuryl- oder Phenyl(meth)-acrylat, polyfunktionelle Monomere wie polyfunktionelle Acrylate bzw. Methacrylate, z.B. Bisphenol A-di(meth)acrylat, Bis-GMA (ein Additionsprodukt aus Methacrylsäure und Bisphenol A-diglycidylether), UDMA (Urethandimethacrylat), z.B. ein Additionsprodukt aus 2-Hydroxyethylmethacrylat und 2,2,4-Hexamethylendiisocyanat), Di-, Tri- oder Tetraethylenglykoldi(meth)acrylat, Decandioldi(meth)acrylat, Dodecandioldi(meth)-acrylat, Hexyldecandioldi(meth)acrylat, Trimethylolpropantri(meth)acrylat, Pentaerythritoltetra(meth)acrylat sowie Butandioldi(meth)acrylat. Besonders bevorzugt sind Bis-GMA, TEDMA (Triethylenglykoldimethacrylat), UDMA (Urethandimethacrylat), TCD-di-HEMA (Bis(methacryloyloxymethyl)tricyclo[5.2.1.0^{2,6}]decan) und TCD-di-HEA (Bis(acryloyloxymethyl)tricyclo[5.2.1.0^{2,6}]decan).

Als bevorzugtes Vernetzermonomer kann mindestens ein Monomer ausgewählt aus den folgenden oder Gemische dieser eingesetzt werden: 2,2-Bis-4-(3-methacryloxy-2-hydroxypropyl)phenylpropan) (Bis-GMA), d.h. das Umsetzungsprodukt von Glycidylmethacrylat und Bisphenol A (OH-gruppenhaltig), und 7,7,9-Trimethyl-4,13-dioxo-3,14-dioxa-5,12-diazahexadecan-1,16-diyldimethacrylat (UDMA), d.h. das Urethandimethacrylat aus 2 Mol 2-Hydroxyethylmethacrylat (HEMA) und 1 Mol 2-2,4-Trimethylhexamethylendiisocyanat (urethangruppenhaltig). Darüber hinaus sind Umsetzungsprodukte von Glycidylmethacrylat mit anderen Bisphenolen, wie z.B. Bisphenol B (2,2'-Bis-(4-hydroxyphenyl)-butan), Bisphenol F (4,4'-Bis(hydroxyphenyl)-methane), (2,2'-Methylendiphenol) oder 4,4'-Dihydroxydiphenyl, sowie Umsetzungsprodukte von 2 Mol HEMA oder 2-Hydroxypropyl(meth)acrylat mit, insbesondere 1 Mol, bekannter Diisocyanate, wie z.B. Hexamethylendiisocyanat, m-Xylylendiisocyanat oder Toluylendiisocyanat, als Vernetzermonomere geeignet.

Als multifunktionelle Vernetzer kommen außer TEDMA und UDMA in Frage: Diethylenglycoldi(meth)acrylat, Trimethylolpropantri(meth)acrylat, Pentaerythritoltetra-(meth)acrylat sowie Butandioldi(meth)acrylat, 1,10-Decandioldi(meth)acrylat, 1,12-Dodecandioldi(meth)acrylat.

Das Dentalmaterial kann vorzugsweise als härtbare Monomer- und/oder Polymerkomponente Monomere und/oder Polymere auch die nachfolgend genannten umfassen: Ein oder mehrere ethylenisch ungesättigte Verbindungen mit oder ohne Säurefunktionalität, beispielsweise Acrylsäureester, Methacrylsäureester, hydroxyfunktionellen Acrylsäureester, hydroxyfunktionellen Methacrylsäureester und Kombinationen davon sowie Mono-, Di- oder Poly-(Meth)Acrylate, d.h. Acrylate und Methacrylate, wie Methyl(meth)acrylat, Ethylacrylat, Isopropylmethacrylat, n-Hexylacrylat, Stearylacrylat, Allylacrylat, Glycerintriacrylat, Ethylenglycoldiacrylat, Diethylenglycoldiacrylat, Triethylenglycoldimethacrylat, 1,3-Propandiol(meth)acrylat, Trimethylolpropantriacrylat, 1,2,4-Butantriol-trimethacrylat, 1,4-Cyclohexandiol-diacrylat, Pentaerythritoltetra(meth)acrylat, Sorbithexacrylate, Tetrahydrofurfuryl(meth)acrylat, Bis[1-(2-acryloxy)]-p-ethoxyphenyldimethylmethan, Bis[1-(3-acryloxy-2-hydroxy)]-p-propoxyphenyldimethylmethane, ethoxyliertes Bisphenol A-di(meth)acrylat und Trishydroxyethylisocyanurat-isocyanurattrimethacrylat, (Meth)acrylamide (d.h., Acrylamide und Methacrylamide), wie (Meth)acrylamid, Methylen-bis(meth) acrylamid und Diaceton(meth)acrylamid, Urethan(meth)acrylate, die Bis(Meth)acrylate von Polyethylenglykolen (vorzugsweise mit einem Molekulargewicht von 200-500 g/mol), copolymerisierbare Mischungen von acrylierten Monomeren, und Vinylverbindungen wie Styrol, Diallylphthalat, Divinylsuccinat, Divinyladipat und Divinylphthalat. Andere geeignete radikalisch polymerisierbare Verbindungen umfassen Siloxan-funktionelle (Meth)acrylate und Fluorpolymer-funktionelle (Meth)acrylate oder Mischungen von zwei oder mehreren radikalisch polymerisierbaren Verbindungen können bei Bedarf verwendet werden.

Die polymerisierbare Komponente kann auch Hydroxylgruppen aufweisen und ethylenisch ungesättigte Gruppen in einem einzigen Molekül. Beispiele für solche Materialien umfassen Hydroxyalkyl(meth)acrylate, wie 2-Hydroxyethyl(meth)acrylat und 2-Hydroxypropyl(meth)acrylat, Glycerinmono- oder -ddi-(meth)acrylat, Trimethylolpropanmono- oder .di-(meth)acrylat, Pentaerythritolmono-, -di- und -tri-(meth)acrylat; Sorbitolmono-, -di-, -tri-, -terta- oder -penta(meth)acrylat und 2,2-Bis[4-(2-Hydroxy-3-methacryloxypropoxy)phenyl]propan (BisGMA) oder Mischungen von ethylenisch ungesättigter Verbindungen. Die härtbare oder polymerisierbare Komponente kann PEGDMA (Polyethylenglykoldimethacrylat mit einem Molekulargewicht von etwa 400 g/mol), GDMA (Glycerindimethacrylat), TEGDMA (Triethylenglycoldimethacrylat) umfassen und/oder NPGDMA (Neopentylglykoldimethacrylat) sowie deren Gemische enthalten.

Zur Initiierung der Polymerisation enthalten die Komposite einen Polymerisationsinitiator, beispielsweise einen Initiator für die radikalische Polymerisation. Je nach Art des verwendeten Initiators können die Mischungen kalt, durch Strahlen vernetzt, d.h. UV- oder VIS vernetzt oder durch Zufuhr von Wärme polymerisierbar sein.

Als Initiatoren für die Temperatur-induzierte Polymerisation können bekannte Peroxide eingesetzt werden, wie Dibenzoylperoxid, Dilauroylperoxid, tert.-Butylperoctoat oder tert.-Butylperbenzoat, aber auch alpha,alpha'-Azo-bis(isobutyroethylester), Benzpinakol und 2,2'-Dimethylbenzpinakol. Die Initiatoren für die Temperatur-induzierte Polymerisation können erfindungsgemäß zur Härtung der dentinfarbenen Zusammensetzung und/oder zum Verkleben der Prothesenzähne mit der Prothesenbasisplatte eingesetzt werden.

Als Photoinitatoren kommen beispielsweise Benzoinalkylether oder -ester, Benzilmonoketale, Acylphosphinoxide oder aliphatische und aromatische 1,2-Diketoverbindungen, wie beispielsweise 2,2-Diethoxyacetophenon 9,10-Phenanthrenchinon, Diacetyl, Furil, Anisil, 4,4'-Dichlorbenzil und 4,4'-Dialkoxybenzil oder Campherchinon in Frage. Die Photoinitiatoren werden vorzugsweise zusammen mit einem Reduktionsmittel verwendet. Beispiele für Reduktionsmittel sind Amine wie aliphatische oder aromatische tertiäre Amine, beispielsweise N,N-Dimethyl-p-toluidin oder Triethanolamin, Cyanethylmethylanilin, Triethylamin, N,N-Dimethylanilin, N-Methyldiphenylamin, N,N-Dimethyl-sym.-xylidin, N,N-3,5-Tetramethylanilin und 4-Dimethylaminobenzoesäureethylester oder organische Phosphite. Gängige Photoinitiatorsysteme sind z.B. Campherchinon plus Ethyl-4-(N,N-dimethylamino)benzoat, 2-(Ethylhexyl)-4-(N,N-dimethylamino)benzoat oder N,N-Dimethylaminoethylmethacrylat.

Als Initiator für die durch UV-Licht initiierte Polymerisation eignet sich besonders 2,4,6-Trimethylbenzoyldiphenylphosphinoxid. UV-Photoinitiatoren können allein, in Kombination mit einem Initiator für sichtbares Licht, einem Initiator für die Kalthärtung und/oder einem Initiator für die Temperatur-induzierte Härtung eingesetzt werden.

Als Initiatoren für die Kaltpolymerisation werden Radikale bildende Systeme, z. B. Benzoyl- bzw. Lauroylperoxid zusammen mit Aminen wie N,N-Dimethyl-sym.-xylidin oder N,N-Dimethyl-p-toluidin verwendet. Es können auch dualhärtende Systeme verwendet werden, z. B. Photoinitiatoren mit Aminen und Peroxiden. Die Initiatoren werden vorzugsweise in Mengen von 0,01 bis 1 Gew.-% bezogen auf die Gesamtmasse der Mischung verwendet. Die Initiatoren für die Kaltpolymerisation können erfindungsgemäßßs zur Härtung der dentinfarbenen Zusammensetzung oder zum Verkleben der Prothesenzähne mit der Prothesenbasisplatte eingesetzt werden.

Bei der Kaltpolymerisation kann es zweckmäßig sein, wenn das Kompositmaterial aufgeteilt in zwei Komponenten vorliegt, die zur Aushärtung durch Vermischen vorgesehen sind. Es ist auch möglich, das Material so bereitzustellen, dass es sowohl durch VIS- und/oder UV-Licht als auch durch Vermischen zweier Komponenten zu härten ist. Die beiden Komponenten des dentinfarbenen Materials können in zwei Pasten vorliegen oder als Pulver-/Flüssigkeitssystem. Das für die Polymerisation erforderliche radikalische Initiatorsystem ist, je nach Reaktionsbedingungen bzw. Polymerisationssystem, in den beiden Pasten aufgeteilt oder in der flüssigen Komponente (A) und/oder der pulverförmigen Komponente (B) enthalten. Diesbezügliche Details sind dem Fachmann bekannt. Beispielsweise liegt bei Basismischungen für Kaltpolymerisate das Initiatorsystem meist in beiden Komponenten, der flüssigen Komponente und der pulverförmigen Komponente, vor und wird demgemäß beim Mischen dieser Komponenten zusammengeführt. Bei den Basismaterialien für Heißpolymerisate liegt der Initiator meist in der Polymerkomponente, d. h. der pulverförmigen Komponente vor. Erst beim Mischen gelangt der Initiator dann in die flüssige Monomerkomponente. Demgemäß können Prothesenausgangsmaterialien vorgesehen sein, bei denen die Initiatorkomponente (C) in der pulverförmigen Komponente (B) vorliegt, insbesondere in Form von Peroxiden, Perketalen, Perestern und/oder Azoverbindungen. Hierbei kann es sich z. B. auch um Restgehalte an bei der Herstellung der pulverförmigen Komponenten nicht abreagierter Initiatorkomponenten handeln, z. B. um Peroxide wie Dibenzoylperoxid.

Als Initiatoren für die Polymerisationsreaktion von kalt- bzw. autopolymerisierenden Ausgangsmischungen kommen grundsätzlich solche in Betracht, mit denen sich radikalische Polymerisationsreaktionen starten lassen. Bevorzugte Initiatoren sind Peroxide wie Dibenzoylperoxid, Dilauroylperoxid und Di-tert.-butylperoxid sowie Azoverbindungen wie Azobis(isobutyronitril) (AIBN).

In Frage kommen demzufolge LPO: Dilauroylperoxid, BPO: Dibenzoylperoxid, t-BPEH: tert.-Butylper-2-ethylhexanoat, AIBN: 2,2'-Azobis-(isobutyronitril), DTBP: Di-tert.-butylperoxid.

Um die Initiierung der radikalischen Polymerisation durch Peroxide zu beschleunigen, können geeignete Aktivatoren, z. B. aromatische Amine, hinzugefügt werden. Exemplarisch seien als geeignete Amine N,N-Dimethyl-p-toluidin, N,N-Dihydroxyethyl-p-toluidin und p-Dibenzylaminobenzoesäurediethylester genannt. Hierbei fungieren die Amine regelmäßig als Co-Initiatoren und liegen üblicherweise in einer Menge von bis zu 0,5 Gew.-% in Bezug auf die Gesamtzusammensetzung vor.

Als radikalische Initiatorsysteme sind weiterhin Redoxsysteme geeignet, insbesondere Kombinationen aus Dibenzoylperoxid, Dilauroyl oder Campherchinon mit Aminen wie N,N-Dimethyl-p-toluidin, N-N-Dihydroxyethyl-p-toluidin und p-Dimethylaminobenzoesäurediethylester. Ferner können als Redoxsysteme auch solche zum Einsatz kommen, die neben einem Peroxid auch noch Ascorbinsäure oder deren Derivate, Barbitursäure oder ein Barbitursäurederivat oder eine Sulfinsäure als Reduktionsmittel enthalten. In einer zweckmäßigen Ausführungsform enthält ein solches Redoxsystem Barbitursäure oder Thiobarbitursäure oder ein Barbitursäure- oder Thiobarbitursäurederivat (beispielsweise 0,01 - 10 Gew.-%), mindestens ein Kupfersalz oder einen Kupferkomplex (beispielsweise 0,1 bis 8 Gew.-%) und mindestens eine Verbindung mit einem ionogen vorliegenden Halogenatom (beispielsweise 0,05 bis 7 Gew.-%) jeweils in Bezug auf den Gehalt an Initiatorsystem von 0,01 bis 1 Gew.-% in Bezug auf die Gesamtzusammensetzung. Exemplarisch seien als geeignete Bestandteile des vorangehend genannten Redoxsystems 1-Benzyl-5-Phenylbarbitursäure, Kupferacetylacetonat und Benzyldibutylammoniumchlorid genannt.

Die Aushärtung der Zusammensetzungen erfolgt vorzugsweise durch redoxinduzierte radikalische Polymerisation bei Raumtemperatur bzw. bei leicht erhöhter Temperatur unter leichtem Druck, um Blasenbildung zu vermeiden. Als Initiatoren für die bei Raumtemperatur durchgeführte Polymerisation werden z.B. Barbitursäuren in Verbindung mit Kupfer- und Chloridionen verwendet. Dieses System zeichnet sich durch eine hohe Farbstabilität aus.

Bevorzugt umfasst die flüssige Zusammensetzung zur generativen Herstellung des mindestens einen Prothesenzahns mindestens ein Monomer, insbesondere mindestens ein Di(meth)acrylat, besonders bevorzugt umfasst die Zusammensetzung UDMA, ethoxyliertes Bisphenol A und optional Dentalgläser sowie pyrogene Kieselsäure.

Vorzugsweise weist der generativ hergestellte Prothesenzahn (6) eine Transluzenz von > 50 % auf. Besonders bevorzugt weist die polymerisierte dentinfarbene, dentale Zusammensetzung eine Transluzenz von grösser gleich 35 % und/oder der mindestens eine generativ hergestellte Prothesenzahn oder der Zahnbogen weist eine Transluzenz von größer gleich 55 bis 65 % auf.

Bevorzugt umfasst die flüssige Zusammensetzung zur generativen Herstellung der Prothesenbasis(platte) mindestens ein Monomer, insbesondere mindestens ein Di(meth)acrylat und optional Füllstoffe wie z.B. Dentalgläser mit d₅₀ < 2 µm und optional pyrogene Kieselsäuren.

Gegenstand der Erfindung sind auch prothetische Formteile, insbesondere dentale prothetische Formteile ausgewählt aus Prothesenzahn, Prothesenzähnen, Zahnbogen umfassend Prothesenzähne, Prothesenbasis(platte) und/oder Total- oder Teilprothese sowie provisorische prothetische Formteile umfassend provisorische Prothesenzähe, provisorischer Zahnbogen, provisorische Prothesenbasisplatte und/oder provisorische Teil-/Totalprothese (jeweils reale Modelle).

Ebenso Gegenstand der Erfindung ist die Verwendung einer fließfähigen, dentinfarbenen, polymerisierbaren, dentalen Zusammensetzung umfassend Dentalgläser in dem erfindungsgemäßen Verfahren.

Ferner ist Gegenstand der Erfindung die Verwendung einer Total- oder Teilprothese erhältlich nach dem Verfahren nach einem der Ansprüche als (i) provisorische Prothese oder (ii) als reales Modell einer provisorischen Prothese zum Anpassen der provisorischen Prothese an die Zahnsituation des Patienten oder (iii) als reales Modell einer provisorischen Prothese zum Anpassen der provisorischen Prothese an die Zahnsituation des Patienten und zum Einscannen der so angepassten provisorischen Prothese sowie optional zur Anpassung des virtuellen Modells des mindestens einen Prothesenzahns oder von Prothesenzähnen, insbesondere eines Zahnbogens, und der Prothesenbasisplatte für die generative Herstellung der Total- oder Teilprothese des Patienten.

Die schematischen Figuren 1 bis 4 stellen eine Ausführungsform der Erfindung dar, ohne die Erfindung auf diese Ausführungsform zu beschränken.
- Fig. 1:: Geschnittene Totalprothese **0** bzw. digitalen Daten des virtuellen Modells der Oberfläche **0** des prothetischen Formteils
- Fig. 2a:: Prothesenbasis(platte) **2** nach dem File-Splitting
- Fig. 2b:: Zahnprothesen **1** nach dem File-Splitting
- Fig. 3:: Schnittdarstellung reale Totalprothese **5** mit Prothesenzahn **6** einer definierten Wandstärke **7** und einem polymerisierten Zusammensetzung **8** im Lumen **4** gefügt auf eine Prothesenbasisplatte **9.**
- Fig. 4a:: Schnittdarstellung virtuelle Zahnprothese(n) **1** mit einer definierten Wandstärke **3/7a** und Lumen **4.**
- Fig. 4b:: Schnittdarstellung reale Zahnprothese(n) **6** mit definierter Wandstärke **7b** und Lumen **4.**
- Fig. 4c:: Schnittdarstellung der realen Zahnprothese(n) **6** mit die teilweise ausgefüllt ist mit dentinfarbener, unpolymerisierter Zusammensetzung **12.**

### Ausführungsbeispiele

Figur 1 zeigt eine geschnittene Totalprothese **0** aus den digitalen Daten des virtuellen Modells der Oberfläche **0** des prothetischen Formteils. Dieser Datensatz wird anschließend mit der Software aufgeteilt (File-Splitting) in die digitalen Daten der Prothesenbasis(platte), die in Figur 2a als Prothesenbasisplatte **2** dargestellt sind und in die digitalen Daten der Zahnprothesen **1**, die in Figur 2b als Oberflächenhülle der Zahnprothesen dargestellt sind. Am Zahnhals (Unterseite nicht sichtbar) liegt als **1.2** der zervikaler Bereich des Prothesenzahns. Ferner ist in Figur 1 die supragingivale Oberfläche **2.3** der Prothesenbasis (über dem Zahnfleisch) dargestellt.

In Figur 2a ist zudem der crestale Bereich **2.2** dargestellt in den das virtuelle Modell des mindestens einen Prothesenzahns **1** oder der Prothesenzähne **1** und das virtuelle Modell der Prothesenbasis **2** aufgeteilt wurden oder alternativ die geschlossene crestale Oberfläche **2.2** in diesem Bereich. Im Bereich **2.2** wird der zervikale Bereich **1.2** des Prothesenzahns gefügt, insbesondere durch Polymerisation überschüssiger dentaler Zusammensetzung **12** nachdem die Zahnprothese und die Prothesenbasisplatte aneinander gepresst wurden.

Figur 3 zeigt eine Schnittdarstellung der hergestellten realen Totalprothese **5** mit Prothesenzahn **6.** Der Prothesenzahn weist eine definierte Wandstärke **7** auf und eine polymerisierte Zusammensetzung **8** im Lumen **4.** Der Prothesenzahn **6** wurde auf eine Prothesenbasisplatte **9** gefügt.

In den Figuren 4a bis 4c sind verschiedene Stadien der Herstellung des Prothesenzahns **1** dargestellt. Figur 4a zeigt einen Querschnitt durch das virtuelle Modell **1** des Zahns des Vollkörpermodells **11** mit einer konstruierten definierten Wandstärke **3** und verbleibendem Lumen bzw. Hohlraum 4. **1.2** stellt den zervikalen Bereich des Zahns dar. Aus diesem Vollkörpermodell wird in einem Stereolitographie-Verfahren der reale Prothesenzahn **6** mit definierter Wandstärke **7** und Lumen **4** hergestellt, wie in Figur 4b aufgezeigt. Die Figur 4c stellt einen weiteren Verfahrensschritt dar, in dem die dentale, dentinfarbene Zusammensetzung **12** in das Lumen **4** des Prothesenzahn **6** eingefüllt ist. Die Zusammensetzung **12** kann polymerisiert werden und anschließend kann weitere dentale Zusammensetzung **12** in das Lumen gefüllt werden. Wenn das Lumen gefüllt ist wird der Prothesenzahn **6** auf die Prothesenbasis **9** aufgesetzt, zusammengepresst und mit UV-Licht polymerisiert. Die so hergestellte Teil- oder Totalprothese **5** kann im Lichtofen nachvergütet werden.

Nachfolgend sind zwei typische Zusammensetzungen für die dentale, polymerisierbare Zusammensetzung im generativen Verfahren zur Herstellung der Zahnprothesen 6 und der Prothesenbasisplatte **9** (Tabelle 1) und für die dentinfarbene Zusammensetzung (Tabelle 2) angegeben.

**Tabelle 1: Beispiele für Zusammensetzung Basisplatte + Zahnschmelz**

| | Gew.-% |
|---|---|
| Ethoxyliertes Bisphenol A-Dimethacrylat | 4 |
| Urethandimethacrylat | 55 |
| Pentaerythritol, propoxyliertes Tetraacrylat | 7 |
| Aliphatisches Dimethacrylat | 16,5 |
| Pyrogene Kieselsäure | 16 |
| Campherchinon | 0,1 |
| Lucirin TPO | 0,7 |
| Tertiäres aromatisches Amin | 0,1 |
| Stabilisatoren | 0,1 |
| UV-Absorber | 0,3 |
| Pigmente | 0,2 |

**Tabelle 2: Beispiele für dentinfarbene Zusammensetzung (Flowable)**

| | Gew.-% |
|---|---|
| Ethoxyliertes Bisphenol-A-Dimethacrylat | 25 |
| Triethylenglykoldimethacrylat | 12 |
| Tertiäres aromatisches Amin | 0,1 |
| Dimethoxy-diphenylethan-1-on | 0,1 |
| Campherchinon | 0,2 |
| UV-Absorber | 0,3 |
| Stabilisator | 0,1 |
| Pyrogene Kieselsäure | 5 |
| Dentalglas | 57 |
| Pigmente | 0,2 |

### Bezugszeichenliste

- **0**: digitale Daten des virtuellen Modells der Oberfläche des prothetischen Formteils (Oberflächenhülle)
- **1**: Oberfläche des mindestens einen Prothesenzahns (Oberflächenhülle)
- **1.2**: zervikaler Bereich Prothesenzahn (Zahnhals)
- **2**: digitale Daten des virtuellen Modells der Oberfläche der Prothesenbasis(platte), (Oberflächenhülle)
- **2.2**: Zahnseitiger Bereich, der sich bildet indem das virtuelle Modell des mindestens einen Prothesenzahns **1** oder der Prothesenzähne **1** und das virtuelle Modell der Prothesenbasis **2** aufgeteilt werden oder alternativ die geschlossene zahnseitige Oberfläche **2.2** in diesem Bereich
- **2.3**: supragingivale Oberfläche der Prothesenbasis (über dem Zahnfleisch, zahnfleischseitige Oberfläche)
- **3**: definierte Wandstärke, digitale Wandstärke in Vollkörpermodell **11**
- **4**: Lumen, innen im Prothesenzahn synonym: Hohlraum, Vertiefungen
- **5**: prothetisches Formteil
- **6**: Prothesenzahn bzw. Prothesenzähne
- **7**: Wandstärke des/r Prothesenzahns/-zähne (**1/6**) (**7a**: virtuelle(r) Prothesenzahn/-zähne, **7b:** reale(r) Prothesenenzahn/-zähne)
- **8**: dentinfarbene, polymerisierte Zusammensetzung im Lumen **4**,
- **9**: Prothesenbasis(platte)
- **10**: virtuelles Vollkörpermodell der Prothesenbasis **2**, insbesondere wird das Vollkörpermodell **10** digital in parallele Schichten zerlegt, und Herstellen der Prothesenbasis **9** in einem generativen Verfahren
- **11**: virtuelles Vollkörpermodell des mindestens einen Prothesenzahns, der mehreren Prothesenzähne, des Zahnbogens
- **12**: dentinfarbene, unpolymerisierte Zusammensetzung

## Patentansprüche

1. Verfahren zur Herstellung eines dentalen prothetischen Formteils (5) umfassend mindestens einen Prothesenzahn (6) und eine Prothesenbasis (9), indem
(A)
1.
(i) die digitalen Daten des virtuellen Modells der Oberfläche des mindestens einen Prothesenzahns (1) bereitgestellt werden, und
(ii) die digitalen Daten des virtuellen Modells der Oberfläche der Prothesenbasisplatte bereitgestellt werden, oder
2.
(i) die digitalen Daten eines virtuellen Modells der Oberflächen (0) des Formteils umfassend den mindestens einen Prothesenzahn (1) sowie die Prothesenbasis (2) bereitgestellt werden,
(ii) die digitalen Daten des virtuellen Modells der Oberflächen (0) des Formteils in die digitalen Daten des virtuellen Modells der Oberfläche des mindestens einen Prothesenzahns (1), und
in die digitalen Daten des virtuellen Modells der Oberfläche der Prothesenbasis (2) aufgeteilt werden,
- wobei die Oberfläche des jeweiligen mindestens einen Prothesenzahns (1) ein innen liegendes Lumen ausbildet, und
(iii) die digitalen Daten des virtuellen Modells der Oberfläche des mindestens einen Prothesenzahns (1) mit einem innen liegenden Lumen (4) in digitale Daten eines virtuellen Vollkörpermodells (11) basierend auf den Daten des virtuellen Modells der Oberfläche (1) umgewandelt werden, indem innen in das virtuelle Modell der Oberfläche des mindestens einen Prothesenzahns (1) eine definierte Wandstärke (3) an die Innenseite der Oberfläche berechnet wird und das virtuelle Vollkörpermodell (11) des mindestens einen Prothesenzahns (1) erhalten wird, und
(iv) das virtuelle Vollkörpermodell (11) des mindestens einen Prothesen zahns (1) digital in parallele Schichten zerlegt wird,
(v) wobei die digitalen Daten des virtuellen Modells der Oberfläche der Prothesenbasis (2) aus Schritt (ii) als Daten eines virtuellen Modells mit geschlossener Oberfläche im Bereich (2.2) vorliegen oder im Bereich (2.2) geschlossen werden oder in dem mindestens einen Bereich (2.2), in dem das virtuelle Modell des mindestens einen Prothesenzahns (1) und das virtuelle Modell der Prothesenbasis (2) aufgeteilt wurden, eine geschlossene Oberfläche (2.2) generiert wird und
(vi) das virtuelle Modell der Prothesenbasis (2) digital in parallele Schichten zerlegt wird,
(vii) Durchführen der Schrittkombinationen (iii), (iv), (v) und (vi) in der Reihenfolge (iii), (iv), (v) und (vi) oder (v), (vi), (iii) und (iv),
(B)
(viii) jeweils unabhängiges Herstellen des mindestens einen Prothesenzahns (6) sowie der Prothesenbasis (9) in einem generativen Verfahren,
(ix) wobei der mindestens eine Prothesenzahn (6) mit einem Lumen (4) mindestens teilweise mit einer polymerisierbaren, dentalen Zusammensetzung aufgefüllt wird,
(x) Fügen des mindestens einen Prothesenzahns (6) und der Prothesenbasis (9) zu einem dentalen prothetischen Formteil (5), und
(xi) Erhalten des dentalen prothetischen Formteils (5) mit mindestens einem Prothesenzahn (6) und einer Prothesenbasis (9).

2. Verfahren nach Anspruch 1, **dadurch gekennzeichnet, dass**
(i) die Wandstärke des virtuellen Vollkörpermodells (11) mindestens von 0,005 mm bis 5 mm beträgt.

3. Verfahren nach Anspruch 1 oder 2, **dadurch gekennzeichnet, dass** zwei oder mehr Prothesenzähne (1) ein virtuelles Vollkörpermodell (11) bilden, indem sie jeweils approximal verbunden sind und mindestens einen Teil eines Zahnbogens bilden.

4. Verfahren nach einem der Ansprüche 1 bis 3, **dadurch gekennzeichnet, dass** die digitalen parallelen Schichten eine Schichtdicke (z-Daten) von 5 bis 200 µm aufweisen.

5. Verfahren nach einem der Ansprüche 1 bis 4, **dadurch gekennzeichnet, dass** das generative Verfahren eine photochemische Polymerisation, Stereolithographie und/oder 3D-Printing umfasst.

6. Verfahren nach einem der Ansprüche 1 bis 5, **dadurch gekennzeichnet, dass** das generative Verfahren auf der photochemischen Polymerisation einer flüssigen Zusammensetzung umfassend Monomere und/oder Polymere basiert ausgelöst durch eine Lichtquelle.

7. Verfahren nach Anspruch 1, **dadurch gekennzeichnet, dass** im Verfahrensschritt (B) nach dem Durchführen des Schrittes (viii) das mindestens eine Lumen (4) der Prothesenzähne (6) mindestens teilweise mit der polymerisierbaren, dentalen Zusammensetzung aufgefüllt wird und die dentale Zusammensetzung zumindest teilweise polymerisiert wird,
und in einem weiteren Verfahrensschritt das
(ix) Fügen des mindestens einen Prothesenzahns (6) und der Prothesenbasis (9) zu einem dentalen prothetischen Formteil (5) erfolgt, indem der mindestens eine Prothesenzahn (6) mit seinem zervikalen Bereich mit den entsprechenden zahnseitigen Bereichen (2.2) der Prothesenbasis zusammengefügt werden und
(x) das dentale prothetische Formteil (5) einer Teil- oder Totalprothese erhalten wird.

8. Verfahren nach Anspruch 1 oder 7, **dadurch gekennzeichnet, dass** das
(ix) Fügen erfolgt, indem der mindestens eine Prothesenzahn (6) und die Prothesenbasis (9) zu einem dentalen prothetischen Formteil (5)
a) zusammengefügt und anschließend die dentale Zusammensetzung polymerisiert wird,
b) zusammengeklebt,
c) aneinander geschmolzen,
d) zusammengeschweisst und/oder
e) aneinandergeschrumpft wird.

9. Verfahren nach Anspruch 8, **gekennzeichnet durch**,
(a) Einfüllen einer polymerisierbaren, dentalen Zusammensetzung in das Lumen (4) des mindestens einen Prothesenzahns (6), und
(b) Polymerisieren der Zusammensetzung, und optional Wiederholen der Schritte a) und b), und
(c) Fügen des mindestens einen Prothesenzahns (6) im zervikalen Bereich mit dem entsprechenden zahnseitigen Bereich (2.2) der Prothesenbasis (9)
(c) Fügen des mindestens einen Prothesenzahns (6) im zervikalen Bereich mit dem entsprechenden zahnseitigen Bereich (2.2) der Prothesenbasis (9) und polymerisieren der Zusammensetzung,
wobei durch das Fügen und optionale Polymerisieren der mindestens eine Prothesenzahn (6) mit der Prothesenbasis (9) verbunden wird.

10. Verfahren nach einem der Ansprüche 8 bis 9, **dadurch gekennzeichnet, dass** die polymerisierbare, dentale Zusammensetzung eine fließfähige, dentinfarbene Zusammensetzung ist.

11. Prothetisches Formteil erhalten nach einem Verfahren nach einem der Ansprüche 1 bis 10.

12. Prothetisches Formteil nach Anspruch 11, umfassend eine Total- oder Teilprothese oder eine provisorische Teil-/Totalprothese.

13. Verwendung einer fliessfähigen, dentinfarbenen, polymerisierbaren, dentalen Zusammensetzung umfassend Dentalgläser in einem Verfahren nach einem der Ansprüche 1 bis 10.

14. Verwendung einer Total- oder Teilprothese erhalten nach dem Verfahren nach einem der Ansprüche 1 bis 10 als (i) reales Modell einer provisorischen Prothese zum Anpassen der provisorischen Prothese an die Zahnsituation des Patienten oder (ii) als reales Modell einer provisorischen Prothese zum Anpassen der provisorischen Prothese an die Zahnsituation des Patienten und zum Einscannen der so angepassten provisorischen Prothese sowie optional zur Anpassung des virtuellen Modells des mindestens einen Prothesenzahns (1) oder der Prothesenzähne, insbesondere des Zahnbogens, und der Prothesenbasisplatte (2) für die generative Herstellung der Total- oder Teilprothese des Patienten.

## Claims

1. Method for the production of a dental prosthetic moulded part (5) comprising at least one prosthetic tooth (6) and a denture base (9), in which
(A)
1.
(i) the digital data of the virtual model of the surface of the at least one prosthetic tooth (1) are provided, and
(ii) the digital data of the virtual model of the surface of the denture baseplate are provided, or
2.
(i) the digital data of a virtual model of the surface (0) of the moulded part comprising the at least one prosthetic tooth (1) and the denture base (2) are provided,
(ii) the digital data of the virtual model of the surfaces (0) of the moulded part are split into the digital data of the virtual model of the surface of the at least one prosthetic tooth (1), and
into the digital data of the virtual model of the surface of the denture base (2),
- the surface of the respective at least one prosthetic tooth (1) forming an internal lumen, and
(iii) the digital data of the virtual model of the surface of the at least one prosthetic tooth (1) having an internal lumen (4) are converted into digital data of a virtual solid body model (11) based on the data of the virtual model of the surface (1) by calculating a defined wall thickness (3) at the inside of the surface inside the virtual model of the surface of the at least one prosthetic tooth (1) and obtaining the virtual solid body model (11) of the at least one prosthetic tooth (1), and, optionally,
(iv) the virtual solid body model (11) of the at least one prosthetic tooth (1) is digitally disassembled into parallel layers,
(v) the digital data of the virtual model of the surface of the denture base (2) of step (ii) being available as data of a virtual model having an enclosed surface in area (2.2) or being enclosed in area (2.2), or an enclosed surface being generated in the at least one area (2.2), in which the virtual model of the at least one prosthetic tooth (1) and the virtual model of the denture base (2) have been split, and
(vi) the virtual model of the denture base (2) being digitally disassembled into parallel layers,
(vii) performing step combinations (iii), (iv), (v) and (vi) in the order of (iii), (iv), (v) and (vi) or (v), (vi), (iii) and (iv),
(B) (viii) each independently producing the at least one prosthetic tooth (6) and the denture base (9) in a generative method,
(ix) the at least one prosthetic tooth (6) having a lumen (4) being filled up, at least in part, with a polymerisable, dental composition,
(ix) joining the at least one prosthetic tooth (6) and the denture base (9) into a dental prosthetic moulded part (5), and
(x) obtaining the dental prosthetic moulded part (5) having at least one prosthetic tooth (6) and a denture base (9).

2. Method according to claim 1, **characterised in that**
(i) the wall thickness of the virtual solid body model (11) is at least from 0.005 mm to 5 mm.

3. Method according to claim 1 or 2, **characterised in that**
two or more prosthetic teeth (1) constitute a virtual solid body model (11) by being approximally connected and forming at least one part of a dental arch.

4. Method according to any one of the claims 1 to 3, **characterised in that**
the digital parallel layers have a layer thickness (z-data) of 5 to 200 µm.

5. Method according to any one of the claims 1 to 4, **characterised in that** the generative method comprises a photochemical polymerisation, stereolithography and/or 3D-printing.

6. Method according to any one of the claims 1 to 5, **characterised in that** the generative method is based on photochemical polymerisation of a liquid composition comprising monomers and/or polymers activated by a light source.

7. Method according to claim 1, **characterised in that** in method step (B), after performing step (viii) the at least one lumen (4) of the prosthetic teeth (6) is filled-up, at least in part, with the polymerisable dental composition and the dental composition is polymerised at least in part,
and in a further method step
(ix) joining the at least one prosthetic tooth (6) and the denture base (9) into a dental prosthetic moulded part (5) ensues by joining together the at least one prosthetic tooth (6) with its cervical area to the corresponding tooth-sided areas (2.2) of the denture base, and
(x) the dental prosthetic moulded part (5) of a partial or total prosthesis is obtained.

8. Method according to claim 1 or 7, **characterised in that**
(ix) joining ensues by
a) joining together and, subsequently, the dental composition is polymerised,
b) gluing together,
c) melting together,
d) welding together and/or
e) shrinking together
the at least one prosthetic tooth (6) and the denture base (9) into a dental prosthetic moulded part (5).

9. Method according to claim 8, **characterised in that**
(a) filling-up a polymerisable dental composition in the lumen (4) of the at least one prosthetic tooth (6), and
(b) polymerising the composition, and, optionally, repeating steps a) and b), and
(c) joining the at least one prosthetic tooth (6), in the cervical area, to the corresponding tooth-sided area (2.2) of the denture base (9),
(c) joining the at least one prosthetic tooth (6), in the cervical area, to the corresponding tooth-sided area (2.2) of the denture base (9) and polymerising the composition,
the at least one prosthetic tooth (6) being connected to the denture base (9) by mating and optionally polymerising.

10. Method according to any one of the claims 8 to 9, **characterised in that** the polymerisable dental composition is a flowable dentin-hued composition.

11. Prosthetic moulded part obtained by a method according to any one of the claims 1 to 10.

12. Prosthetic moulded part according to claim 11, comprising a total or partial prosthesis or temporary partial/total prosthesis.

13. Use of a flowable dentin-hued polymerisable dental composition comprising dental glasses in a method according to any one of the claims 1 to 10.

14. Use of a total or partial prosthesis obtained by the method according to any one of the claims 1 to 10 as (i) real model of a temporary prosthesis for adjusting the temporary prosthesis to the dental condition of the patient, or (ii) as real model of a temporary prosthesis for adjusting the temporary prosthesis to the dental condition of the patient and for scanning the thus adjusted temporary prosthesis, as well as, optionally, for adjustment of the virtual model of the at least one prosthetic tooth (1) or the prosthetic teeth, in particular the dental arch, and the denture baseplate (2) for generative production of the total or partial prosthesis of the patient.

## Revendications

1. Procédé pour la production d'une pièce moulée prothétique dentaire (5) comprenant au moins une dent de prothèse (6) et une base de prothèse (9), dans lequel
(A)
1.
(i) les données numériques du modèle virtuel de l'au moins une dent de prothèse (1) sont fournies, et
(ii) les données numériques de la surface de la plaque de base de prothèse sont fournies, ou
2.
(i) les données numériques d'un modèle virtuel de la surface (0) de la pièce moulée comprenant l'au moins une dent de prothèse (1) et la base de prothèse (2) sont fournies,
(ii) les données numériques de la surface (0) de la pièce moulée sont partagées en les données numériques du modèle virtuel de la surface de l'au moins une dent de prothèse (1), et
en les données numériques du modèle virtuel de la surface de la base de prothèse (2),
- la surface de l'au moins une dent de prothèse respective (1) formant un lumen interne, et
(iii) les données numériques du modèle virtuel de la surface de l'au moins une dent de prothèse (1) ayant un lumen interne (4) sont converties en données numériques d'un modèle de corps solide virtuel (11) basées sur les données du modèle virtuel de la surface (1) par calculer une épaisseur de paroi définie (3) à la face intérieure de la surface à l'intérieur du modèle virtuel de la surface de l'au moins une dent de prothèse (1) et obtenir le modèle de corps solide virtuel (11) de l'au moins une dent de prothèse (1), et, facultativement,
(iv) le modèle de corps solide virtuel (11) de l'au moins une dent de prothèse (1) est décomposé numériquement en couches parallèles,
(v) les données numériques du modèle virtuel de la surface de la base de prothèse (2) de l'étape (ii) étant disponible comme des données d'un modèle virtuel ayant une surface fermée dans la zone (2.2) or sont fermées dans la zone (2.2), ou une surface fermée étant générée dans l'au moins une zone (2.2), dans laquelle le modèle virtuel de l'au moins une dent de prothèse (1) et le modèle virtuel de la base de prothèse (2) ont été partagées, et
(vi) le modèle virtuel de la base de prothèse (2) étant désassemblé en couches parallèles,
(vii) effectuer les combinaisons d'étapes (iii), (iv), (v) et (vi) dans l'ordre de (iii), (iv), (v) et (vi) ou (v), (vi), (iii) et (iv),
(B) (viii) produire, chacune indépendamment, l'au moins une dent de prothèse (6) et la base de prothèse (9) dans un procédé génératif,
(ix) l'au moins une dent de prothèse (6) ayant un lumen (4) étant remplie, au moins en partie, d'une composition dentaire polymerisable,
(ix) joindre l'au moins une dent de prothèse (6) et la base de prothèse (9) en une pièce moulée prothétique dentaire (5), et
(x) obtenir la pièce moulée prothétique dentaire (5) ayant au moins une dent de prothèse (6) et une base de prothèse (9).

2. Procédé selon la revendication 1, **caractérisé en ce que**
(i) l'épaisseur de paroi du modèle de corps solide virtuel (11) est au moins de 0,005 mm à 5 mm.

3. Procédé selon la revendication 1 ou 2, **caractérisé en ce que**
deux ou plusieurs dents de prothèse (1) constituent un modèle de corps solide virtuel (11) par être connectées de manière approximale et former au moins une partie d'une arcade dentaire.

4. Procédé selon l'une des revendications 1 à 3, **caractérisé en ce que**
les couches parallèles numériques ont une épaisseur de couche (z-données) de 5 à 200 µm.

5. Procédé selon l'une des revendications 1 à 4, **caractérisé en ce que** le procédé génératif comprend une polymérisation photochimique, la stéréolithographie et/ou l'impression 3D.

6. Procédé selon l'une des revendications 1 à 5, **caractérisé en ce que**
le procédé génératif est basé sur une polymérisation photochimique d'une composition liquide comprenant des monomères et/ou des polymères, declenchée par une source lumineuse.

7. Procédé selon la revendication 1, **caractérisé en ce que** dans l'étape (B), après avoir effectué l'étape (vii) l'au moins un lumen (4) des dents de prothèse (6) est rempli, au moins en partie, de la composition dentaire polymérisable et la composition dentaire est polymérisée au moins en partie,
et dans une autre étape du procédé
(ix) joindre l'au moins une dent de prothèse (6) et la base de prothèse (9) en une pièce moulé prothétique dentaire (5) en joignant l'au moins une dent de prothèse (6) avec sa zone cervicale aux zones correspondantes du coté dent (2.2) de la base de prothèse, et
(x) la pièce moulée prothétique dentaire (5) d'une prothèse partielle ou totale est obtenue.

8. Procédé selon la revendication 1 ou 7, **caractérisé en ce que**
(ix) joindre se fait par
a) joindre ensemble et, ensuite, la composition dentaire est polymérisée,
b) agglutiner ensemble,
c) fondre ensemble,
d) souder ensemble et/ou
e) rétrécir ensemble
l'au moins une dent de prothèse (6) et la base de prothèse (9) en une pièce moulée prothétique dentaire (5).

9. Procédé selon la revendication 8, **caractérisé en ce que**
(a) remplir un composition dentaire polymérisable dans le lumen (4) de l'au moins une dent de prothèse (6), et
(b) polymériser la composition, et, facultativement, répéter les étapes a) et b), et
(c) joindre l'au moins une dent de prothèse (6), dans la zone cervicale aux zones correspondantes du côté dent (2.2) de la base de prothèse (9),
(c) joindre l'au moins une dent de prothèse (6) dans la zone cervicale, aux zones correspondantes du côté dent (2.2) de la base de prothèse (9) et polymériser la composition,
l'au moins une dent de prothèse (6) étant connectée à la base de prothèse (9) par accoupler ou facultativement polymériser.

10. Procédé selon l'une des revendications 8 à 9, **caractérisé en ce que** la composition dentaire polymérisable est une composition fluide colorée en dentine.

11. Pièce moulée prothétique obtenue par un procédé selon l'une des revendications 1 à 10.

12. Pièce moulé selon la revendication 11, comprenant une prothèse totale ou partielle ou une prothèse temporaire partielle/totale.

13. Utilisation d'une composition dentaire polymérisable fluide colorée en dentine comprenant des verres dentaires dans un procédé selon l'une des revendications 1 à 10.

14. Utilisation d'une prothèse totale ou partiale obtenue par le procédé selon l'une des revendications 1 à 10 en tant que (i) un modèle réel d'une prothèse temporaire pour adapter la prothèse temporaire à la situation dentaire du patient, ou (ii) en tant qu'un modèle réel d'une prothèse temporaire pour adapter la prothèse temporaire à la situation dentaire d'un patient et pour scanner la prothèse temporaire ainsi adaptée, ainsi que, facultativement, pour l'ajustement du modèle virtuel de l'au moins une dent de prothèse (1), ou des dents de prothèse, en particulière l'arcade dentaire, et la plaque de base de prothèse (2) pour la production générative de la prothèse totale ou partiale du patient.
